# FASCICULE DE BREVET EUROPEEN

(11) **EP 0 647 052 B1**
(45) Date de publication et mention de la délivrance du brevet: **19.03.2003**
(21) Numéro de dépôt: 94402194.8
(22) Date de dépôt: 30.09.1994
(51) Int. Cl.: H04M 3/50, H04L 12/14

(54) **Système de gestion de la consommation de consultations de données sur un réseau de télécommunications**
Gebührenverwaltungssystem für Datenbankbefragungen in einem Fernmeldenetz
Management system for charging of database queries in a telecommunications network

(30) Priorité: 04.10.1993 FR 9311801
(43) Date de publication de la demande: 05.04.1995
(73) Titulaire: FRANCE TELECOM, 75015 Paris (FR); TELEDIFFUSION DE FRANCE, 75015 Paris (FR)
(72) Inventeur: Leclercq, Thierry, F-75013 Paris (FR); Sallio, Patrick, F-35235 Thorigne-Fouillard (FR)
(74) Mandataire: Fort, Jacques

(56) Documents cités:
- EP-A- 0 539 016
- US-A- 4 879 742
- PATENT ABSTRACTS OF JAPAN vol. 6, no. 182 (E-131) (1060) 18 Septembre 1982 & JP-A-57 095 741 (NIPPON DENKI K K) 14 Juin 1982

## Description

La présente invention concerne un système de gestion de la consommation de consultations de données sur un réseau de télécommunication.

Avec la multiplication du trafic de consultations de données sur les réseaux de télécommunication, de type réseaux de transmission de données numériques, multiplication due notamment à l'augmentation et à la diversité croissante des prestations de services fournies par les centres serveurs connectés à ces réseaux, apparaît actuellement un problème majeur d'accessibilité en raison du caractère décroissant de la disponibilité de ces centres serveurs. Bien que le problème d'accessibilité précité ne soit pas directement posé par la capacité de transmission des réseaux numériques modernes, la gestion directe de la consommation de consultations de données entre abonnés et centres serveurs précités par ces derniers présente, en premier lieu, l'inconvénient d'augmenter systématiquement la durée du temps d'accès, et finalement l'encombrement du réseau. Elle présente en deuxième lieu l'inconvénient d'une gestion assujettie à l'autorité responsable de chaque centre serveur, ce qui peut freiner le développement des demandes d'accès à ces derniers par les abonnés, l'autorité responsable précitée se trouvant fatalement en position de juge et partie, en cas de litige en matière de gestion avec un ou plusieurs abonnés.

Le document EP-A-0 539 016 divulgue un dispositif équipé de services avancés et sa méthode de fonctionnement, permettant de mémoriser d'une part des requêtes de transport de paquets de données entre des systèmes de données situés dans des zones de transport à accès local téléphonique déterminées et d'autre part des requêtes de services avancés, et permettant en outre de déterminer et d'accumuler des prix pour l'utilisation du dispositif par chaque paquet de données en fonction desdites requêtes de transport et desdites requêtes de services avancés.

La présente invention a pour objet un système de gestion de la consommation de consultations de données sur un réseau de télécommunication, permettant de remédier notamment aux inconvénients précités.

Un autre objet de la présente invention est en particulier la mise en oeuvre d'un système de gestion de la consommation de consultations de données sur un réseau de télécommunication permettant d'offrir aux fournisseurs de service de consultations et de téléchargement sur les réseaux numériques de télécommunication modernes, la prise en compte par un tiers de toute opération de gestion d'accès aux services, de paiement des contenus et reversement, tiers en qui les différents acteurs ont toute confiance, ce système de gestion apparaissant, pour ces derniers, comme un véritable médiateur télé-informatique.

Un autre objet de la présente invention est également la mise en oeuvre d'un système de gestion de la consommation de consultations de données sur un réseau de télécommunication utilisant des mécanismes universels, indépendants des caractéristiques propres des réseaux de télécommunication.

Un autre objet de la présente invention est également la mise en oeuvre d'un système de gestion de la consommation de consultations de données sur un réseau de télécommunication, d'une très grande souplesse d'utilisation relativement à la diversité des prestations fournies.

Un autre objet de la présente invention est également la mise en oeuvre d'un système de gestion de la consommation de consultations de données sur un réseau de télécommunication permettant de qualifier certains abonnés particuliers, en fonction de pratiques de consommation spécifiques.

Un autre objet de la présente invention est également la mise en oeuvre d'un système de gestion de la consommation de consultations de trafic d'un réseau de télécommunication permettant d'offrir à tout abonné utilisateur du réseau un guichet ou point d'entrée unique fédérateur.

Un autre objet de la présente invention est enfin la mise en oeuvre d'un système de gestion de la consommation de consultations de données d'un réseau de télécommunication présentant les caractéristiques de multiréseau d'accès, de multiréseau de distribution/consommation, et de multiapplicatif, ce qui permet aux centres serveurs prestataires de services une très grande souplesse de tarification et une très grande facilité d'internationalisation de l'offre et de la prestation de service.

Le système de gestion de la consommation de consultations de données sur un réseau de télécommunication entre un centre serveur distant et un terminal d'abonné local, la communication entre le centre serveur distant et le terminal d'abonné local étant réalisée par l'intermédiaire d'une liaison de type commuté, est remarquable en ce qu'il comporte un module de gestion de la consommation, externe à cette liaison, permettant, par une communication de type interactif entre, d'une part, le terminal d'abonné local et le module de gestion, et, d'autre part, entre le module de gestion et le centre serveur distant, d'établir, contrôler et acquitter cette consommation entre le centre serveur distant et le terminal d'abonné local.

Le système de gestion de la consommation de consultations de données sur un réseau de télécommunication, objet de la présente invention, trouve application à la gestion de la consommation de consultations de données sur un réseau de télécommunication entre un terminal d'abonné local et un centre serveur distant, terminal d'abonné local et centre serveur distant étant localisés sur un même territoire national ou sur des territoires nationaux distincts.

Une description plus détaillée du système de gestion de la consommation de consultations de données objet de la présente invention sera donnée en liaison avec les dessins ci-après dans lesquels :
- la figure la représente un schéma synoptique d'un système de gestion de la consommation de consultations sur un réseau de télécommunication conforme à l'objet de la présente invention ;

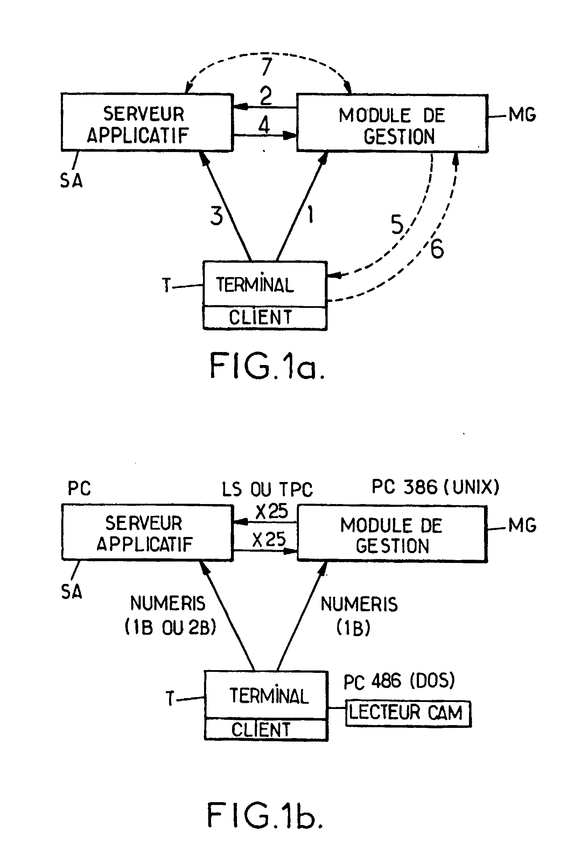

- la figure 1b représente un mode de réalisation particulier du système objet de la présente invention tel que représenté en figure la,
- les figures lc et 1d représentent, à titre illustratif un chronogramme des échanges de messages entre les différents éléments constitutifs du système objet de la présente invention, l'ensemble de ces échanges pouvant constituer un protocole de communication de type interactif entre ces différents éléments,
- la figure 2a représente, sous forme de schéma synoptique, une décomposition fonctionnelle d'un module de gestion de la consommation de consultations constitutif d'un système objet de la présente invention,
- la figure 2b représente un diagramme de répartition des tâches entre les différents éléments constitutifs du sytème objet de la présente invention et un opérateur assurant le transport ou acheminement des messages et des données consultées,
- les figures 3a, 3b et 3c représentent respectivement une première, une deuxième et une troisième variante de réalisation du système objet de la présente invention, tel que représenté en figure la,
- les figures 4a, 4b et 4c représentent respectivement un schéma synoptique de la configuration matérielle du module de gestion, du terminal local et d'un centre serveur distant, serveur applicatif, permettant la réalisation d'un système conforme à l'objet de la présente invention.

Une description plus détaillée d'un système de gestion de la consommation de consultations de données sur un réseau de télécommunication entre un centre serveur distant et un terminal d'abonné local, conformément à l'objet de la présente invention, sera maintenant donnée en liaison avec la figure la et les figures suivantes.

En premier lieu, on précisera les notions de terminal d'abonné local et de centre serveur distant dans l'acception utilisée dans le cadre de la description de la présente demande de brevet.

Un terminal d'abonné local est un terminal capable d'engendrer et de recevoir des messages sur un réseau de télécommunications, conformément aux dispositions légales d'un territoire national donné en matière de télécommunications.

Un centre serveur distant est un centre serveur capable d'engendrer et de recevoir des messages sur un réseau de télécommunications, ce centre serveur étant situé sur le même territoire national ou sur un territoire national distinct du territoire dans lequel est situé un terminal d'abonné local quelconque, selon la définition précitée.

Ainsi, la liaison entre le centre serveur distant, noté SA, et le terminal d'abonné local, noté T, est réalisée par l'intermédiaire d'une liaison de télécommunication de type commuté. On rappelle que la notion de liaison de télécommunication de type commuté couvre à la fois la commutation de réseaux ainsi que la commutation de paquets d'informations transmis sous forme numérique.

Conformément à un aspect particulièrement remarquable du système de gestion objet de la présente invention, celui-ci comprend un module de gestion, noté MG, de cette consommation, ce module étant externe à la liaison entre serveur distant, SA, et terminal d'abonné local, T. On indique que, d'une manière générale, le module de gestion, MG, permet, par une commmunication de type interactif entre, d'une part, le terminal d'abonné local, T, et le module de gestion, MG, par l'intermédiaire d'une liaison notée 1 sur la figure la, et, d'autre part, entre le module de gestion, MG, et le centre serveur distant, SA, par l'intermédiaire de liaisons 2 et 4, par exemple, d'établir, de contrôler et d'acquitter la consommation de consultations, établies par l'intermédiaire de la liaison de télécommunication de type commuté, notée 3 sur la figure la, entre le centre serveur distant, SA, et le terminal d'abonné, T.

Une description plus détaillée de la structure du système de gestion objet de la présente invention, sera maintenant donnée en liaison avec la figure 1b.

Selon une caractéristique avantageuse du système de gestion précité, la communication entre le module de gestion, MG, et le terminal d'abonné distant, T, peut être réalisée par l'intermédiaire d'une liaison de télécommunication à débit inférieur ou égal au débit de la liaison entre le terminal d'abonné local, T, et le serveur distant, SA.

Dans un mode de réalisation particulier, on indique que les liaisons de télécommunication précitées peuvent être constituées par une liaison du type réseau numérique à intégration de services, R.N.I.S., et en particulier par le réseau NUMERIS (1B), pour ce qui concerne la liaison notée 1 entre le terminal d'abonné local T et le module de gestion, MG, et par ce même réseau NUMERIS (1B) ou (2B), pour ce qui concerne la liaison de télécommunication de type commuté entre le terminal d'abonné local, T, et serveur distant, SA.

En ce qui concerne la communication entre le module de gestion, MG, et le centre serveur distant, SA, celle-ci peut de préférence être réalisée par l'intermédiaire d'une liaison numérique à commutation de paquets, satisfaisant à la recommandation de commutation de paquets, X.25, du C.C.I.T.T. (Comité Consultatif International pour le Téléphone et le Télégraphe).

On indique que cette liaison peut en particulier être réalisée par une liaison spécialisée, LS, ou par l'intermédiaire du réseau TRANSPAC. Sur la figure 1b, ces liaisons sont notées respectivement LS ou TPC.

D'une manière générale, on indique que le terminal d'abonné local, T, peut être réalisé au moyen d'un micro-ordinateur personnel, de type PC, comportant un microprocesseur de type INTEL 80 486. Le module de gestion, MG, peut être réalisé à partir d'un micro-ordinateur de type PC, comportant un micro-processeur de type INTEL 80 386 par exemple, ainsi qu'il sera décrit ultérieurement dans la description.

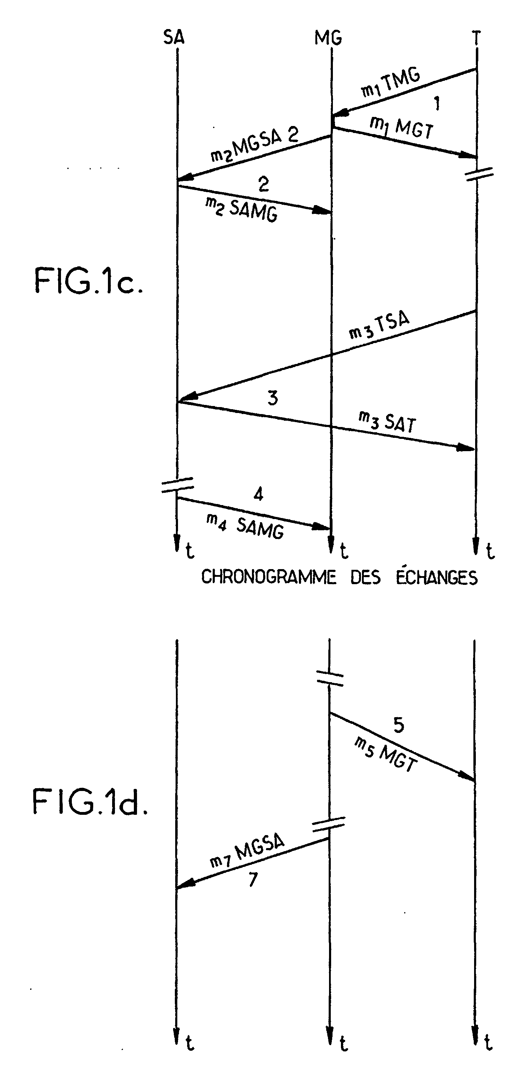

Bien entendu, le système de gestion objet de la présente invention utilise pour son fonctionnement, c'est-à-dire pour l'établissement de la communication de type interactif entre les différents éléments, un protocole de communication, lequel est illustré schématiquement en figure 1c.

Sur la figure précitée, on indique que l'axe vertical représente l'axe des temps, à partir d'une origine arbitraire, les événements étant reportés pour le terminal d'abonné local, T, le module de gestion, MG, et le serveur distant, SA. Ces événements correspondent à l'émission et/ou à la réception de messages dont les indices chiffrés correspondent au numéro de liaison empruntée.

Selon un aspect particulièrement avantageux du système de gestion objet de la présente invention, le protocole de communication comporte au moins successivement les étapes de connexion du terminal d'abonné local, T, au module de gestion, MG, et d'acquittement de cette connexion. Par convention, les messages d'acquittement, lesquels font partie des protocoles normalement utilisés pour la transmission et la réception de données sur les différentes liaisons considérées, ne seront ni désignés ni décrits en détail, car ces messages d'acquittement correspondent à des formats de messages connus.

Le message de connexion du terminal d'abonné local au module de gestion, MG, ce message étant noté m₁TMG, est transmis sur la liaison de télécommunication 1 précitée, sous forme d'une communication courte, c'est-à-dire d'une communication dont la durée est comprise au maximum entre 10 secondes et 15 secondes.

Le message de connexion, m₁TMG, peut comprendre, dans un mode de réalisation avantageux, un champ d'identification de l'abonné, l'abonné pouvant disposer au niveau du terminal d'abonné local d'un lecteur de carte d'identification ou de mot de passe, cet abonné pouvant être titulaire d'une carte d'identification correspondante. Le message de demande de connexion, m₁TMG, peut comporter également un champ de déclinaison par le client de l'identité du service qu'il souhaite consommer, c'est-à-dire de l'identité du centre serveur distant et de la nature des données ou informations qu'il souhaite obtenir de ce dernier, et pris en compte par le module de gestion, MG, un champ représentatif du profil et de la classe de l'abonné, ainsi qu'il sera décrit ultérieurement dans la description.

Suite à la réception par le module de gestion, MG, du message de demande de connexion, m₁TMG précité, le module de gestion, MG, permet, sur critère de comparaison des données contenues dans le message de demande de connexion, m₁TMG, à des paramètres préchargés concernant cet abonné, d'autoriser ou non l'ouverture d'un crédit alloué par transaction et l'accès de cet abonné au service demandé, c'est-à-dire au centre serveur distant, SA, identifié.

Sur décision positive relativement à cette autorisation, le module de gestion, MG, permet d'affecter à l'abonné considéré une clé temporaire autorisant, pour cet abonné, l'accès au serveur applicatif, SA, et mise à disposition des informations nécessaires à la connexion vers le serveur distant ou serveur applicatif, SA, précité. Ces informations nécessaires à la connexion concernent par exemple un code d'accès ou d'appel du serveur précité.

Suite à la décision positive précitée, une opération 2 de transmission par le module de gestion, MG, au centre serveur distant d'un message d'autorisation de demande de service pour le terminal abonné considéré est effectuée par l'envoi par le module de gestion, MG, au centre serveur distant, SA, d'un message correspondant, noté m₂MGSA, sur la figure 1c. Ce message m₂MGSA comporte la clé temporaire d'accès au centre serveur distant, SA.

La clé temporaire est engendrée par le module de gestion MG lorsqu'un client, qui a satisfait à des contrôles de mot de passe, crédits et profils, sélectionne le service applicatif qu'il souhaite consulter. Elle est d'abord transmise au serveur applicatif qui la conserve pendant un certain temps. Elle est ensuite transmise au terminal, qui la fournit au serveur lors de l'appel. Le contenu de la clef répond aux contraintes suivantes :
- elle doit être la référence unique, présente dans tous les échanges liés à une transaction (consommation d'un service et facturation) : échanges T-MG, MG-SA et T-SA,
- elle doit permettre de retrouver, en cas de litige, l'historique d'une transaction,
- elle ne doit pas pouvoir être "devinée" par un client pendant qu'elle est valide sur le centre serveur distant SA.

En fonction de ces critères, une structure adaptée peut être la suivante :
Clef complète : [code client][code SA][année][quantième]
   [numéro de dossier], avec [année] sur deux chiffres, [quantième], jour de l'année de 1 à 365, [numéro de dossier] égal à [heure] égal à [numéro aléatoire], avec [heure] en hh mm ss de l'affectation de la clef, et [numéro aléatoire], chiffre de 0000 à 9999. Par exemple, la clef complète engendrée pour le client de code 0001, service 0002, le 6 janvier 1993 à 14 h 32 mn 10 s, créée avec un numéro aléatoire 9876 sera :

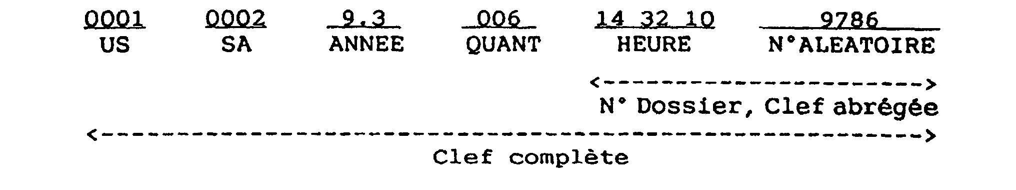

Seul le numéro du dossier (clef abrégée) est connu du client. Il est affiché sur l'écran du terminal avant la connexion au serveur applicatif. Ce numéro de dossier étant unique, il permet de retrouver a posteriori les événements survenus pendant la transaction (causes d'erreur ou problèmes de taxation). Le module de gestion MG s'assure que deux clients ne peuvent avoir le même numéro de dossier en le comparant avec les numéros déjà engendrés pendant la seconde courante.

D'une manière générale, et de façon particulièrement avantageuse, on indique que la transmission du message m₂MGSA est effectuée également par une communication courte, permettant la transmission de la clé temporaire précédemment mentionnée au centre serveur distant, SA, du montant de crédit alloué par le module de gestion, MG, ainsi que d'information spécifique concernant l'abonné, la configuration du terminal local dont celui-ci dispose et la liaison avec le centre serveur, SA.

Le module de gestion, MG, transmet par l'intermédiaire de la liaison 1, précédemment mentionnée, un message d'activation du terminal abonné local, T, ce message étant noté m₁MGT et contenant notamment la clé temporaire d'accès au centre serveur distant, SA, afin de permettre au terminal abonné local, T, d'effectuer la demande de connexion avec le centre serveur distant, SA, précité.

Suite à la réception du message de validation, m₁MGT, précédemment mentionné, la liaison 1 est rompue. Le terminal abonné local, T, transmet alors un message de demande de connexion du terminal abonné au centre serveur distant, ce message étant noté m₃TSA et transmis par l'intermédiaire de la liaison de télécommunication de type commuté 3.

D'une manière générale, on indique que ce message de demande de connexion, m₃TSA, comporte bien entendu la clé temporaire d'accès, laquelle étant également connue du centre serveur distant, SA, permet d'effectuer l'interconnexion directe du terminal d'abonné local, T, au centre serveur distant, SA, dans les conditions habituelles de connexion propres à ce type de liaison de télécommunication, tel que le réseau numérique à intégration de service (R.N.I.S.).

Bien entendu, suite à la réception du message de demande de connexion, m₃TSA, le centre serveur distant, SA, peut engendrer un message de validation du message de demande de connexion précité et effectue la transmission et l'échange de données entre le centre serveur, SA, distant et le terminal d'abonné, T, suivant la prestation de service demandée, par l'envoi d'un ou plusieurs messages successifs, lesquels seront notés en vue de simplification par la désignation m₃SAT. L'échange des données, et, en conséquence, la prestation de service demandée, est bien entendu effectué par la liaison 3 précédemment mentionnée dans la description.

Enfin, suite à la fourniture de la prestation de service demandée, la liaison 3 est rompue par le centre serveur distant, SA, lequel conformément à un aspect particulièrement avantageux du protocole de dialogue interactif entre les divers éléments du système de gestion objet de la présente invention, effectue la transmission vers le module de gestion, MG, d'un message noté m₄SAMG, de compte rendu de prestation de service par la liaison 4 vers le module de gestion, MG. On rappelle que la transmission de ce message de compte rendu de prestation de service est effectuée par une liaison numérique à commutation de paquets de type liaison spécalisée, ou TRANSPAC.

D'une manière générale, on indique que le message de demande de connexion du terminal abonné local au centre serveur distant, message m₃TSA sur la figure 1c, peut comporter des informations permettant à l'abonné de négocier le montant réel de la consommation suivant des critères commerciaux spécifiques, tels que volume d'achat, tarif dégressif, algorithme de l'offre et de la demande, type d'usage et profil du client, ainsi que mentionné précédemment.

En ce qui concerne le message de compte rendu de prestations de services, m₄SAMG, transmis du centre serveur distant, SA, vers le module de gestion, MG, on indique que celui-ci est également effectué par l'intermédiaire d'une communication courte, ce message concernant certaines caractéristiques de la consommation de l'abonné, caractéristiques telles que la nature et le montant négocié précédemment mentionnés, par exemple.

D'une manière générale, on indique qu'une consommation non acquittée n'est pas facturée par le module de gestion, MG, et qu'une consommation dépassant le montant autorisé par le module de gestion, MG, c'est-à-dire le montant consommé qui est plus grand que le crédit alloué, ne peut non plus être facturée dans sa totalité par le module de gestion, MG.

En outre, ainsi qu'on l'a représenté en figure 1d, le protocole de communication interactif des différents éléments constitutifs du système de gestion objet de la présente invention peut comporter, suite à validation du message de compte-rendu de prestation de service, message m₄SAMG précédemment mentionné, des étapes de transmission par le module de gestion, MG, vers le terminal d'abonné local, T, d'un message, noté m₅MGT, d'information sur la facturation de la prestation de service effectuée, ce message consistant essentiellement en un débit associé au terminal d'abonné, T, considéré.

Le protocole peut en outre comporter, ainsi que représenté en figure 1d, une étape de transmission par le module de gestion, MG, vers le centre serveur distant, SA, d'un message, noté m₇MGSA, de reversement du crédit restant alloué au bénéfice du terminal d'abonné, T.

Le message d'information sur la facturation, m₅MGT, est établi à partir d'un fichier de compte client-fichier des payeurs, géré par le module de gestion, MG, permettant une gestion de la facturation pour le compte d'un fournisseur, c'est-à-dire pour le compte d'un centre serveur distant, SA. Ces informations peuvent contenir par exemple la fréquence de l'émission des factures, le type de facturation de la consommation.

A titre d'exemple non limitatif, sur les figures la et 1b notamment, on indique que le paiement par l'abonné de sa facture auprès du module de gestion, MG, peut être effectué notamment par l'intermédiaire d'un paiement électronique. Ce type de paiement sera décrit ultérieurement dans la description.

En ce qui concerne la transmission par le module de gestion, MG, vers le centre serveur distant, SA, du message de reversement, m₇MGSA, on indique que ce message comprend des informations établies selon le critère négocié par contrat entre l'abonné et le module de gestion, MG, en fonction des modalités de rémunération et de paiement des prestations effectuées.

D'une manière générale, on indique que l'étape de connexion du terminal d'abonné local, T, au module de gestion, MG, l'étape de transmission par le module de gestion, MG, au centre serveur distant, SA, du message d'autorisation de demande de service et l'étape de transmission par le terminal d'abonné local, T, au centre serveur distant, SA, d'un message de demande de connexion, m₃TSA, ainsi que l'étape de transmission et d'échange de données entre le centre serveur distant et le terminal d'abonné, T, puis l'étape de transmission par le centre serveur distant, SA, vers le moyen de gestion du message de compte rendu de prestation de service, m₄SAMG, peuvent être réalisées en temps réel. Par réalisation en temps réel de ces étapes, on indique que les seuls décalages de temps entre la réalisation séquentielle de la transmission de ces différents messages est imputable au temps de transmission des messages et au temps de réponse des éléments de décision, suite à la réception des messages précités.

Par contre, en ce qui concerne l'étape de transmission par le module de gestion, MG, vers le terminal d'abonné local, T, du message de facturation, m₅MGT, et l'étape de transmission par le module de gestion, MG, au centre serveur distant, SA, du message de reversement, m₇MGSA, on indique que ces étapes peuvent être effectuées en temps réel par des liaisons 5 ou 7 correspondantes, dans les conditions précédemment définies ou en temps différé. Bien entendu, l'exécution de ces étapes en temps différé peut être réalisée par des moyens non télématiques, le message d'information sur la facturation, m5MGT, pouvant dans un tel cas être constitué par un message sous forme de lettre missive, par exemple. Il en est de même également lorsque, pour le paiement de la facturation représentée par l'étape 6 sur la figure la, par exemple, le paiement est effectué par des moyens de paiement non électroniques ou non télématiques.

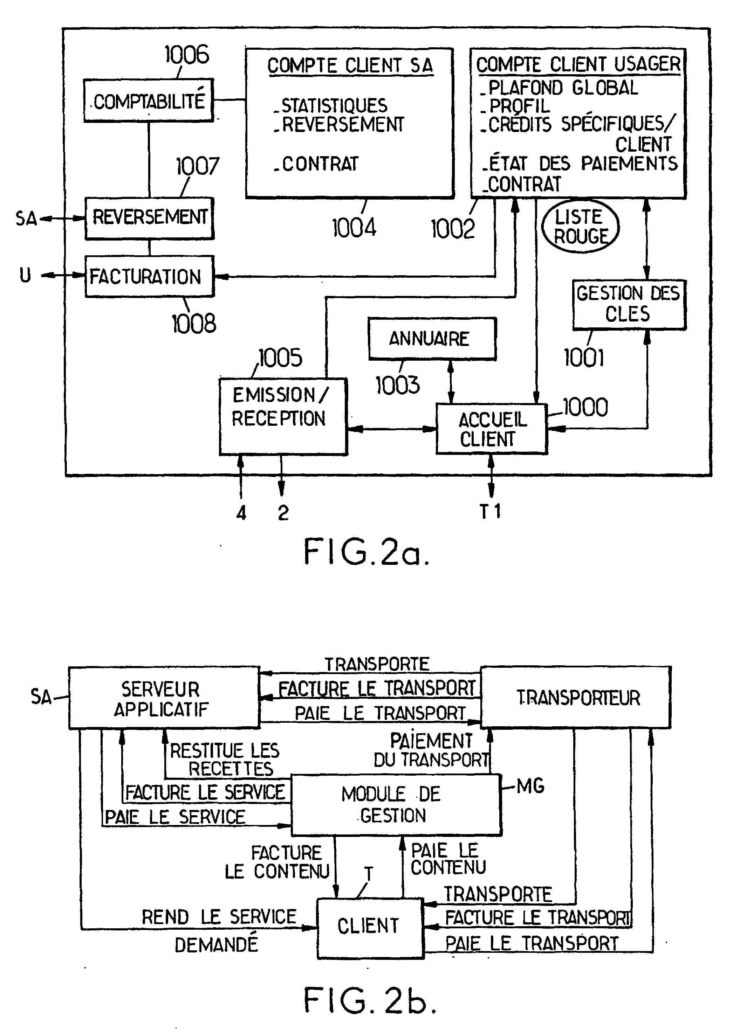

Une description plus détaillée des différentes fonctions réalisées effectivement par le module de gestion, MG, du système de gestion objet de la présente invention, pour la mise en oeuvre du protocole précédemment décrit, en liaison avec les figures 1c et 1d, sera maintenant donnée en relation avec la figure 2a.

D'une manière générale, on indique que le module de gestion, MG, comporte les fonctions ci-après :
- gestion de l'accès pour un abonné considéré,
- identification de l'abonné,
- gestion centralisée des accès, c'est-à-dire contrôle d'accès au centre serveur distant, fournisseur de prestations, avec objectif de paiement et émission des clés d'accès temporaire, en 1001,
- gestion de cartes dans le cas où une carte d'accès est attribuée à chaque abonné, ou gestion d'un mot de passe,
- gestion, en 1002, des contrats et des comptes clients abonnés, c'est-à-dire gestion des droits associés à ces derniers, de leurs crédits, des plafonds, des impayés mis à jour, de listes de surveillance, de type liste rouge, en 1002,
- gestion du paiement des contenus consommés sur le serveur distant, SA, considéré,
- émission de factures et gestion fine de la facturation, en 1008,
- recouvrement de ces factures pour le compte des fournisseurs, c'est-à-dire gestion d'un compte client par le centre serveur distant, SA, en 1004,
- interface de paiement, comptabilité, en 1006,
- gestion du reversement,
- gestion des contrats fournisseurs pour chaque centre serveur distant, SA, et reversement à ces derniers, en 1004, ainsi que statistique de consommation dans ce même module,
- gestion d'un annuaire, en 1003, avec gestion des services correspondants à l'offre commerciale du module de gestion, MG,
- possibilité de téléchargement de listes d'annuaires,
- utilisation de l'annuaire comme publicité promotion du service par le centre serveur distant, SA,
- gestion de l'interface d'exploitation avec notamment, en 1005,
- exécution des liaisons physiques 2 et 4 par l'intermédiaire de la liaison par commutation de paquets entre le module de gestion, MG, et chaque centre serveur distant, SA,
- gestion du reversement, en 1007, et de la facturation, en 1008.

On comprend bien sûr que les modules précités, notés de 1000 à 1008, sont réalisés par les modules de programme correspondants, dans lesquels tous les paramètres sont codés sous forme de variable logique.

Sur la figure 2b, on a représenté un diagramme de la répartition des tâches entre le système de gestion objet de la présente invention, formé par un terminal, T, abonné local, un module de gestion, MG, et un ou plusieurs serveurs distants, SA, l'ensemble de ces éléments étant interconnecté, ainsi que décrit précédemment dans la description, en liaison avec les figures la ou 1b, par exemple, au moyen des lignes et liaisons de télécommunication gérées par le transporteur, lequel assure, de ce fait, la seule prestation de l'acheminement des données entre les différents éléments précités.

Ainsi qu'on pourra l'observer sur la figure 2b précitée, les communications 1, 2 et 4 sont de courte durée, ce qui permet d'envisager la mise en oeuvre du système de gestion objet de la présente invention, dans les conditions précédemment décrites. On indique en particulier que le module de gestion peut être placé par rapport au terminal abonné local, T, soit localement, selon la définition donnée précédemment dans la description, c'est-à-dire que le module de gestion, MG, se trouve situé dans le même territoire national que le terminal abonné local faisant usage de ce dernier, soit au contraire situé de manière distante, le module de gestion, MG, étant situé sur un territoire national distinct de celui dans lequel est situé le terminal abonné local, T, faisant appel au module de gestion, MG, précité.

On comprend ainsi que, pour un site d'implantation donné quelconque du module de gestion, MG, c'est-à-dire un territoire national quelconque, celui-ci, bien que restant soumis du point de vue de la transmission des messages à la législation nationale correspondante en matière de télécommunications, peut toutefois comprendre dans ses modules de tarification et de gestion de contrat tous les éléments correspondants à des spécifications particulières du territoire national, dans lequel le terminal d'abonné local, T, est implanté.

A ce titre, on indique que, selon une caractéristique particulièrement avantageuse du système de gestion objet de la présente invention une séparation effective de la tarification entre le contenu des informations transportées et le transport de ces informations est donc mis en oeuvre de la manière ci-après :
- paiement à l'acte par l'abonné, dont le montant est entièrement maîtrisé par le centre serveur distant, SA, et facturation spécifique par le module de gestion, MG,
- transport : les communications 1 et 3 sont prises en charge par l'abonné sur la facture de télécommunication établie par l'autorité du pays dans lequel le terminal abonné local est implanté, les communications 2 et 4 étant prises en charge par le couple module de gestion, MG/centre serveur distant, SA.

Le module de gestion, MG, permet le paiement de consommations de montant faible ou, au contraire, important. Il prend le risque d'autoriser ou non le crédit alloué au terminal abonné local, T, de gérer les contentieux tels que impayés, non livraisons de la prestation, et gère le reversement aux abonnés.

Le module de gestion MG apparaît comme un intervenant obligatoire pour résoudre les contentieux de toute nature.

En liaison avec la figure 2b, on indique que l'autorité nationale assurant le transport ou acheminement des données véhiculées par les différents messages assure le transport de ces données, la facturation de ce transport selon les règles propres à la législation en vigueur dans le pays considéré en fonction du lieu d'implantation, soit du terminal abonné local correspondant, soit du serveur applicatif ou centre serveur distant, SA, précité.

Au contraire, le module de gestion, MG, facture le service au centre serveur distant, SA, et le contenu de la prestation au terminal abonné local, T.

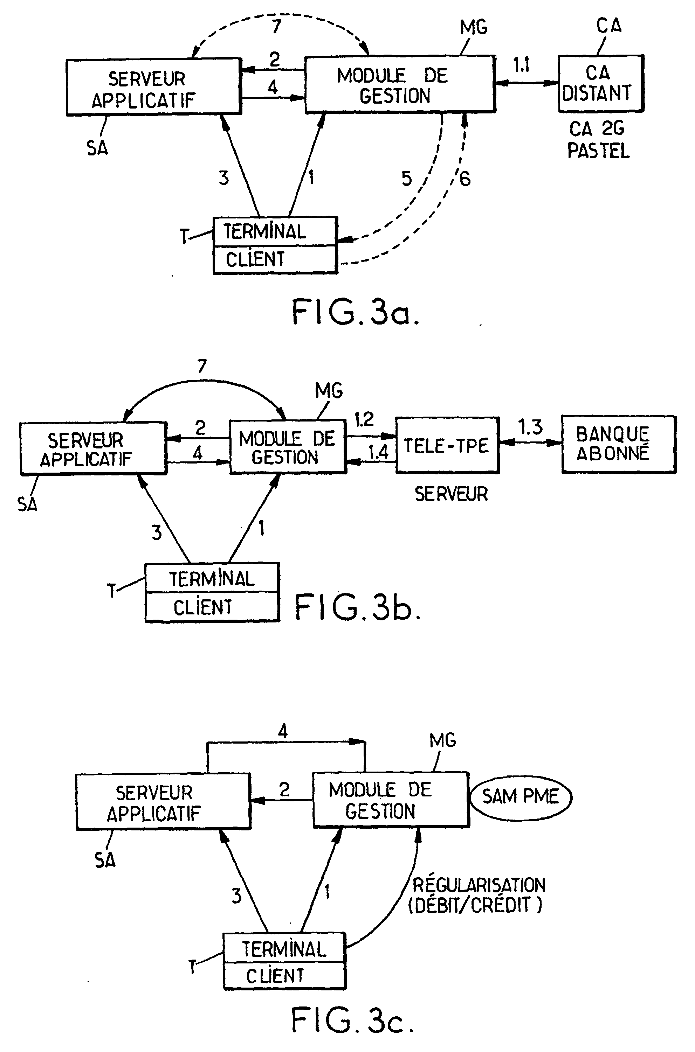

Différentes variantes de réalisation du système de gestion objet de la présente invention seront maintenant décrites en liaison avec les figures 3a à 3c.

Dans un premier mode de réalisation particulier représenté en figure 3a, on indique que, au module de gestion, MG, peut être associé un moyen d'identification constitué par exemple par un centre d'autorisation, CA, distant, interconnecté au module de gestion, MG, par l'intermédiaire d'une liaison à commutation de paquets, notée 1.1, de type X.25, par exemple. Cette liaison peut donc ainsi être constituée par une liaison comparable aux liaisons 2 et 4 de la figure la, 1b. Dans un tel cas, le terminal abonné local, T, peut être muni d'un lecteur de cartes, et l'abonné peut être titulaire d'une carte privatique d'accès, par exemple une carte de type PASTEL assurant en fait un moyen d'identification, mais non pas un moyen de point d'entrée au service de gestion, et en particulier au module de gestion, MG. On indique également que la carte privatique d'accès peut être constituée par une carte PC2, par exemple. La liaison 1.1 est une liaison en temps réel, laquelle est effectuée dans le protocole associé au système de gestion objet de la présente invention, immédiatement après la liaison 1, mais antérieuement à la liaison 2.

On indique enfin que la liaison 1.1 précitée peut permettre le téléchargement de listes discriminatoires, listes rouges, sous le contrôle du module de gestion, MG, à partir du centre d'autorisation distant, CA.

Sur la figure 3b, on a représenté une deuxième variante de réalisation, dans laquelle le paiement est effectué à l'aide de moyens de paiement électronique, par exemple.

On indique, en liaison avec la figure 3b, l'utilisation d'une procédure de type carte bancaire, avec une ouverture possible vers des abonnés ou clients de type grand public, notamment en vue d'effectuer un pré-paiement effectif.

Trois manières d'effectuer un paiement distant par carte bancaire peuvent être envisagées :
- le module de gestion, MG, gère un accès vers un terminal de paiement électronique, noté TPE, par l'intermédiaire d'une liaison, notée 1.2, ce terminal de paiement électronique étant distant, de type connu, ce terminal de paiement électronique étant lui-même interconnecté par une liaison 1.3 à l'organisme bancaire de l'abonné. Le pré-paiement est alors effectué par l'intermédiaire de la liaison 1.4 au module de gestion, MG, et l'on se rapproche alors des procédures du télépaiement sécurisé par carte bancaire avec fonction de reroutage dans le réseau. On indique que les liaisons 1.2, 1.3 et 1.4 sont des liaisons de type liaison de télécommunications par commutation de paquets par exemple, comme les liaisons 2 et 4 précédemment décrites dans la description.
- Le module de gestion, MG, peut également être reconnu comme terminal de paiement électronique par l'organisme bancaire. Dans un tel cas, les liaisons 1.2 et 1.4 peuvent alors être supprimées.
- La paiement peut se faire également directement sur le centre serveur distant ou serveur applicatif, SA.

On indique que, dans le cas de la figure 3b, le paiement effectué est un paiement du type juste avant consommation, selon une procédure d'approvisionnement d'un compte intermédiaire, tel qu'un porte-monnaie électronique, PME.

Dans le cas de la figure 3c, enfin, le paiement électronique est effectué par l'intermédiaire d'un compte intermédiaire, type porte-monnaie électronique ou porte-jeton électronique, en phase identifiée en fin de consommation. Dans un tel cas, on indique que le module de gestion, MG, dispose ou a accès à un module d'authentification de sécurité SAM (security authentification module, en langage anglo-saxon).

Afin d'éviter la rupture de communication entre le serveur distant et le terminal abonné local, pour un paiement sur le porte-monnaie électronique, PME, et le retour obligatoire en fin de connexion 3 sur le module de gestion, MG, il est alors opportun de prévoir le débit du porte-monnaie électronique, PME, de l'abonné, non pas juste après la consommation, mais à la connexion suivante de l'abonné au serveur distant correspondant. Dans un tel cas, le module de gestion, MG, effectue en fait une régularisation, le module de gestion, maintenant une facture en instance, pouvant être analysée en un crédit temporaire.

Un tel mécanisme peut être mis en route à la fois pour la gestion du porte-monnaie électronique, PME, et celle du porte-jeton électronique, PJE. Dans ce dernier cas, la notion de module d'authentification de sécurité disparaît.

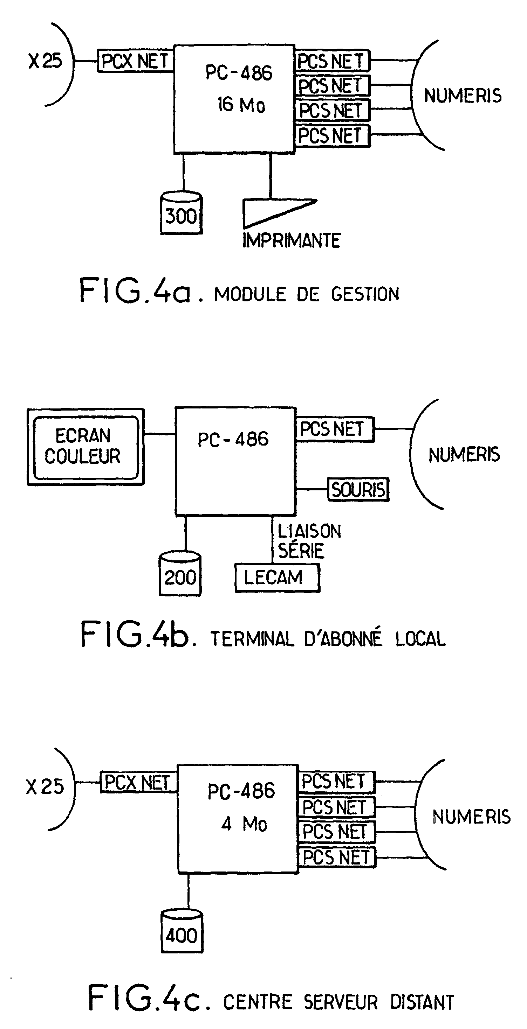

Une description plus détaillée du module de gestion, MG, du terminal d'abonné local, T, et du centre serveur distant, SA, ou tout au moins une configuration matérielle envisagée de ces derniers sera donnée en liaison avec les figures 4a, 4b et 4c.

Sur la figure 4a, on a représenté une configuration du module de gestion, MG, lequel outre le microprocesseur précédemment mentionné cadencé à une fréquence de 33 MHz, est équipé d'une mémoire vive de 16 Mo, une pluralité de cartes de télécommunication micro-ordinateur permettant le raccordement d'une pluralité de terminaux d'abonnés locaux au module de gestion. On indique que ces cartes de télécommunication peuvent être constituées par des cartes PCSNET-OST satisfaisant à la norme NUMERIS et permettant l'accès simultané de 8 terminaux au module de gestion, MG.

En outre, le module de gestion, MG, comprend une pluralité de cartes d'interfaces micro-ordinateur / liaison numérique à commutation de paquets, permettant d'assurer l'accès et la connexion simultanée du module de gestion, MG, à plusieurs centres serveurs distants distincts, SA. Ces cartes sont du type PCXNET-OST permettant l'accès simultané à plusieurs serveurs distants.

D'une manière générale, on indique que le module de gestion, MG, et le micro-ordinateur constitutif de celui-ci sont équipés d'un système d'exploitation de type UNIX. Ce système d'exploitation, en raison de son architecture multiprocesseur, et multitâche, permet notamment de gérer les aspects multi-utilisateurs et multi-réseaux du module de gestion, MG.

L'applicatif module de gestion, MG, tel que défini en liaison avec les figures 2a et 2b notamment, peut être réalisé par l'intermédiaire d'un logiciel serveur normalisé, de type REFTEL. Ce logiciel assure la gestion de 8 abonnés, par exemple, connectés par l'intermédiaire du réseau NUMERIS, et permet de réaliser le dialogue interactif précité. Il gère également les protocoles multimédias et STUCAM, et permet une évolution aisée vers d'autres types de réseaux.

Enfin, un système de gestion de base de données de type ORACLE peut être implanté. On indique bien sûr que pour l'implantation de l'ensemble de ces fonctions, le micro-ordinateur précité peut être muni d'un disque dur de 300 Mo.

Ainsi que représenté en figure 4b, chaque terminal d'abonné local, T, peut être implanté sur un micro-ordinateur comportant le type de processeur précédemment mentionné dans la description, muni de ses périphériques. Il comporte également une carte de liaison de type NUMERIS, PCSNET-OST, un disque dur de capacité 200 Mo, un lecteur de carte à mémoire de type LECAM, et un pointeur de type souris.

Le terminal est équipé de logiciels de type logiciels applicatifs dont le logiciel REFTEL, permettant la consultation multimedia et le transfert de fichiers, par exemple.

Enfin, le centre serveur distant représenté en figure 4 peut également être implanté sur une machine de type micro-ordinateur PC comportant un processeur mentionné précédemment dans la description cadencé à 33 MHz et une mémoire vive de 4 Mo, par exemple. Chaque serveur applicatif, SA, est également équipé de ses périphériques et, en outre, de cartes de télécommunication micro-ordinateur pour l'accès des terminaux. Ces cartes sont de type PCSNET-OST, par exemple.

L'accès au module de gestion, MG, est de même assuré par une carte d'interface micro-ordinateur liaison numérique à commutation de paquets de type PCXNET-OST.

Toutes les références portant la mention OST désignent des produits logiciels commercialisés en France par la société OUEST STANDARD TELEMATIQUE.

En ce qui concerne les intercommunications entre les différents éléments du système de gestion objet de la présente invention, on indique que les protocoles utilisés pour assurer les différentes communications sont les protocoles représentés dans le tableau ci-après :

| PROTOCOLE | DESIGNATION | ECHANGE |
|---|---|---|
| ETS 300 080 | Accès à NUMERIS en X.25 | T-MT et T-SA |
| ETS 300 079 | Protocole de com. sur NUMERIS | T-MT et T-SA |
| ETS 300 075 | Transfert de fichiers STUTEL | T-SA |
| ETS 300 072 | Alphamosaïque | T-MT et T-SA |
| ETS 300 073 | Géométrique | T-SA |
| ETS 300 177 | Syntaxe photo JPEG | T-SA |
| ETS 300 149 | Syntaxe audio | T-SA |
| ETS 300 076 | Identification terminal | T-MT et T-SA |
| JPEG | Compression image | T-SA |
| G7 xx | Son numérique | T-SA |
| STUCAM | Pilotage LECAM | T-MT |

Parmi les protocoles mentionnés dans le tableau précédent, on indique que la référence ETS désigne le protocole défini conformément aux spécifications de l'Institut Européen de Standardisation des Télécommunications (European Telecommunication Standard Institute), la désignation JPEG désigne des protocoles correspondant aux spécifications définies par l'Organisation Internationale de Standardisation (International Standardization Organisation).

La désignation STUCAM correspondant à des spécifications publiées en France par FRANCE TELECOM.

On a ainsi décrit un système de gestion de la consommation de consultations de données sur un réseau de télécommunications particulièrement performant tant du point de vue de la rapidité d'intervention et finalement d'exécution de la prestation de service que du point de vue de la souplesse d'utilisation.

En ce qui concerne la rapidité de prestation de service, on indique que, dans le mode de réalisation décrit en liaison avec la figure 1b notamment, les temps d'accès sont-les suivants :
- 3 secondes à 6 secondes pour joindre le module de gestion, MG, ces temps correspondant au temps d'établissement de la liaison NUMERIS,
- quelques secondes pour le traitement par le module de gestion, MG, ces traitements comportant notamment identification de l'abonné et serveur applicatif à consulter, vérification des crédits affectés, et émission de la clé temporaire vers le serveur distant, SA, et vers l'abonné local, T,
- 3 secondes à 6 secondes pour joindre le serveur distant, SA,
- 1 seconde pour effectuer le contrôle de la clé par le serveur applicatif, SA.

Le temps d'établissement minimal global pour l'abonné est donc inférieur à 15 secondes.

En outre, du point de vue de la souplesse d'utilisation, on indique que le module de gestion, MG, permet au centre serveur distant, SA, de garder l'initiative du montant de la tarification.

L'abonné peut ainsi négocier auprès du centre serveur distant, SA, le montant à payer et vice-versa, le centre serveur distant, SA, pouvant avoir différentes stratégies en fonction du type d'abonné, gratuité forfaitaire à l'acte, tarif dégressif progressif à la durée. La stratégie adaptée à l'usager peut ainsi être mise en oeuvre à partir d'informations correspondant à un profil d'usager, lequel est communiqué dans la liaison 2.

En outre, le module de gestion, MG, est un tiers en qui les différents abonnés ont confiance. On indique en particulier que le module de gestion, MG, peut être placé dans n'importe quel territoire national accessible par les réseaux de télécommunication précédemment décrits dans la description.

Enfin, le module de gestion, MG, gère deux types de crédit :
- le crédit total alloué au compte client, lequel peut être géré avec la technique des plafonds glissants sur des intervalles de temps déterminés,
- le crédit spécifique alloué par transaction et par individu, c'est-à-dire par abonné local.

Enfin, en ce qui concerne les domaines de responsabilité comparés du module de gestion, MG, et du centre serveur distant, SA, vis-à-vis de l'abonné local, on indique que :
- la présentation de l'offre des serveurs applicatifs ou serveurs distants, SA, et la fixation du montant à percevoir sont du domaine de responsabilité des serveurs applicatifs,
- la définition du montant du crédit accordé à un client et le recouvrement des montants négociés sont du domaine de responsabilité du module de gestion, MG.

Enfin, l'architecture du système de gestion objet de la présente invention est ouverte vers d'autres fonctionnalités, telles que notamment les modes de paiement, les moyens de paiement.

Dans la description précédente, l'accès à un serveur ditant SA a été envisagé pour un seul module de gestion MG. Il va de soi toutefois, et ce sans sortie du cadre de l'objet de la présente invention, que l'accès à un même serveur distant peut être géré, pour une pluralité d'abonnés, par plusieurs modules de gestion distincts, moyennant une identification de chacun des modules de gestion considéré.

## Revendications

1. Système de gestion de la consommation de consultations de données sur un réseau de télécommunication entre un centre serveur distant (SA) et un terminal d'abonné local (T), la communication entre le centre serveur distant et le terminal d'abonné local étant réalisée par l'intermédiaire d'une liaison de télécommunication (3) de type commuté, **caractérisé en ce que** ledit système comporte un moyen (MG) de gestion de la consommation, externe à ladite liaison, permettant par une communication de type interactif entre, d'une part, ledit terminal d'abonné local et ledit moyen de gestion, et, d'autre part, entre ledit moyen de gestion et ledit centre serveur distant, d'établir, contrôler et acquitter ladite consommation entre ledit centre serveur distant et ledit terminal d'abonné.

2. Système de gestion selon la revendication 1, **caractérisé en ce que** la communication entre ledit moyen de gestion et ledit terminal d'abonné local est réalisée par l'intermédiaire d'une liaison de télécommunication (1) à débit inférieur ou égal au débit de la liaison (3) entre terminal d'abonné local et serveur distant.

3. Système de gestion selon la revendication 1 ou 2, **caractérisé en ce que** la communication entre ledit moyen de gestion et ledit centre serveur distant est réalisée par l'intermédiaire d'une liaison numérique (2,4) à commutation de paquets.

4. Système de gestion selon l'une des revendications précédentes, **caractérisé en ce que** ladite communication de type interactif entre ledit terminal d'abonné local et ledit moyen de gestion respectivement ledit moyen de gestion et le centre serveur distant est gérée par un protocole de communication comportant au moins successivement les étapes :
- de connexion dudit terminal d'abonné local audit moyen de gestion et d'acquittement de cette connexion,
- de transmission par ledit moyen de gestion audit centre serveur distant d'un message (m₂ MGSA) d'autorisation de demande de service pour le terminal abonné considéré, et, sur validation par le centre serveur distant dudit message d'autorisation de demande de service,
- de demande de connexion dudit terminal abonné local audit centre serveur distant, par transmission à ce dernier d'un message (m₃ TSA) de demande de connexion, et sur validation dudit message de demande de connexion,
- de transmission et d'échange de données entre ledit centre serveur distant et ledit termninal d'abonné local suivant la prestation de service demandée, et suite à la fourniture de la prestation de service demandée,
- de transmission par ledit centre serveur distant vers ledit moyen de gestion d'un message (m₄ SAMG) de compte rendu de prestation de service.

5. Système de gestion selon la revendication 4, **caractérisé en ce que** ledit protocole de communication peut comporter en outre, suite à validation du message de compte rendu de prestation de service par le moyen de gestion, des étapes :
- de transmission par le moyen de gestion vers le terminal d'abonné d'un message (m₅ MGT) d'information sur la facturation de la prestation de service, consistant en un débit associé audit terminal d'abonné,
- de transmission par ledit moyen de gestion vers ledit centre serveur distant d'un message (m₇ MGSA) de reversement du crédit restant alloué au bénéfice dudit terminal d'abonné.

6. Système de gestion selon la revendication 4, **caractérisé en ce que** ledit message de demande de connexion comporte des informations permettant à l'abonné de négocier le montant réel de la consommation.

7. Système de gestion selon l'une des revendications 2 à 4, **caractérisé en ce que** l'étape de connexion dudit terminal d'abonné local audit moyen de gestion, l'étape de transmission par le moyen de gestion au centre serveur distant d'un message d'autorisation de demande de service, l'étape de transmission par le terminal abonné au centre serveur distant d'un message de demande de connexion, l'étape de transmission et d'échange de données entre le centre serveur distant et le terminal d'abonné, l'étape de transmission par le centre serveur distant vers le moyen de gestion d'un message de compte rendu de prestation de service sont réalisées en temps réel.

8. Système de gestion selon l'une des revendications 2 à 5, **caractérisé en ce que** l'étape de transmission par le moyen de gestion vers le terminal d'abonné local d'un message de facturation et l'étape de transmission par le moyen de gestion au centre serveur distant du message de reversement sont effectuées en temps réel ou différé.

9. Système de gestion selon l'une des revendications précédentes, **caractérisé en ce que** ledit moyen de gestion comprend au moins :
- un micro-ordinateur muni de ses éléments périphériques, ledit micro-ordinateur comprenant
- une pluralité de cartes de télécommunication pour micro-ordinateur permettant le raccordement d'une pluralité de terminaux d'abonnés,
- une pluralité de cartes d'interface micro-ordinateur liaison numérique à commutation de paquets permettant d'assurer l'accès et la connexion simultanée à plusieurs centres serveurs distants distincts.

10. Système de gestion selon la revendication 9, **caractérisé en ce que** ledit moyen de gestion est interconnecté à un centre d'autorisation (CA) distant.

11. Système de gestion selon la revendication 9, **caractérisé**
**en ce que** ledit moyen de gestion est interconnecté à un système de paiement électronique.

## Claims

1. System for managing the usage of data consultations in a telecommunication network between a remote server centre (SA) and a local subscriber terminal (T), communication between the remote server centre and the local subscriber terminal being carried out by way of a telecommunication link (3) of switched type, **characterized in that** said system includes a usage-management means (MG), external to the said link, making it possible, through a communication of interactive type between, on the one hand, the said local subscriber terminal and said management means, and, on the other hand, between said management means and said remote server centre, to set up, monitor and acknowledge said usage between said remote server centre and said subscriber terminal.

2. Management system according to Claim 1, **characterized in that** the communication between said management means and said local subscriber terminal is carried out by way of a telecommunication link (1) whose data rate is less than or equal to the data rate of the link (3) between the local subscriber terminal and the remote server.

3. Management system according to Claim 1, **characterized in that** the communication between said management means and said remote server centre is carried out by way of a packet-switched digital link (2,4).

4. Management system according to one of the preceding claims, **characterized in that** the said communication of interactive type between said local subscriber terminal and said management means respectively said management means and said remote server centre is managed by a communication protocol including at least successively the steps :
- of connection of said local subscriber terminal to said management means and of acknowledgement of said connection,
- of transmission by said management means to said remote server centre of a service request authorization message (m₂MGSA) in respect of the relevant subscriber terminal, and, on validation by said remote server centre, of said service request authorization message,
- of request for connection of said local subscriber terminal to said remote server centre, by transmission to the latter of a connection request message (m₃TSA), and on validation, of said connection request message,
- of transmission and of exchange of data between said remote server centre and said local subscriber terminal in accordance with the service provision requested, and subsequent to the supplying of said requested service provision,
- of transmission by said remote server centre to said management means of a service provision status message (m₄SAMG).

5. Management system according to Claim 4, **characterized in that** the said communication protocol can furthermore include, subsequent to the validation of the service provision status message by said management means, steps:
- of transmission by said management means to said subscriber terminal of an information message (m₅MGT)regarding the billing of the service provision, consisting of a debit associated with said subscriber terminal,
- of transmission by said management means to said remote server centre of a refund message (m₇MGSA) for the remaining credit allotted in favour of said subscriber terminal.

6. Management system according to Claim 4, **characterized in that** the said connection request message includes information allowing the subscriber to negotiate the actual amount of the usage.

7. Management system according to anyone of Claims 2 to 4, **characterized in that** the said step of connection of the said local subscriber terminal to said management means, said step of transmission by said management means to said remote server centre of a service request authorization message, the said step of transmission by said subscriber terminal to said remote server centre of a connection request message, the said step of transmission and of exchange of data between said remote server centre and said subscriber terminal, the said step of transmission by said remote server centre to said management means of a service provision status message, are carried out in real time.

8. Management system according to anyone of Claims 2 to 5, **characterized in that** the step of transmission by said management means to said local subscriber terminal of a billing message and the step of transmission by said management means to said remote server centre of the refund message are performed in real or non-real time.

9. Management system according to anyone of the preceding Claims, **characterized in that** said management means comprises at least:
- one microcomputer provided with its peripheral elements, said microcomputer comprising
- a plurality of telecommunication cards for microcomputer allowing the connecting of a plurality of subscriber terminals,
- a plurality of packet-switching digital link to microcomputer interface cards enabling access and simultaneous connection to several separate remote server centres.

10. Management system according to Claim 9, **characterized in that** said management means is interconnected to a remote authorization centre (CA).

11. Management system according to Claim 9, **characterized in that** said management means is interconnected with an electronic payment system.

## Patentansprüche

1. System zur Verwaltung des Datenabrufaufkommens in einem Fernmeldenetz zwischen einem fernen Zentralserver (SA) und einem Anschluss eines Ortsteilnehmers (T), wobei die Kommunikation zwischen dem fernen Zentralserver und dem Anschluss eines Ortsteilnehmers (T) mittels einer geschalteten Fernmeldeverbindung (3) verwirklicht ist,
**dadurch gekennzeichnet,**
**dass** dieses System ein Mittel (MG) zur Verwaltung des Aufkommens umfasst, welches Mittel außerhalb dieser Verbindung liegt und über eine interaktive Kommunikation einerseits zwischen dem Anschluss des Ortsteilnehmers und dem Verwaltungsmittel und andererseits zwischen dem Verwaltungsmittel und dem fernen Zentralserver erlaubt, das Aufkommen zwischen dem fernen Zentralserver und dem Anschluss des Teilnehmers zu aufzubauen, zu steuern und zu quittieren.

2. Verwaltungssystem nach Anspruch 1,
**dadurch gekennzeichnet,**
**dass** die Kommunikation zwischen dem Verwaltungsmittel und dem Ortsteilnehmeranschluss mittels einer Fernmeldeverbindung (1) mit einer Leistung hergestellt wird, die geringer oder gleich der Leistung der Verbindung (3) zwischen dem Ortsteilnehmeranschluss und dem fernen Server ist.

3. Verwaltungssystem nach Anspruch 1 oder 2,
**dadurch gekennzeichnet,**
**dass** die Kommunikation zwischen dem Verwaltungsmittel und dem fernen Zentralserver mittels einer numerischen Verbindung (2, 4) mit Datenpakettransfer hergestellt wird.

4. Verwaltungssystem nach einem der vorstehenden Ansprüche,
**dadurch gekennzeichnet,**
**dass** die interaktive Kommunikation zwischen dem Ortsteilnehmeranschluss und und dem Verwaltungsmittel bzw. zwischen dem Verwaltungsmittel und dem fernen Zentralserver durch ein Kommunikationsprotokoll gesteuert wird, das nacheinander wenigstens die folgenden Schritte umfasst:
- Verbinden der Ortsteilnehmeranschlusses mit dem Verwaltungsmittel und Quittieren dieser Verbindung,
- Übertragen, durch das Verwaltungsmittel zum fernen Zentralserver, einer Autorisierungsnachricht (m₂MGSA) zum Anfordern der Dienstleistung für den betreffenden Teilnehmeranschluss, und bei Validierung der Autorisierungsnachricht zum Anfordern der Dienstleistung durch den Zentralserver
- Anfordern einer Verbindung des Ortsteilnehmeranschlusses beim fernen Zentralserver durch Übertragen einer Verbindungsanforderungsnachricht (m₃TSA) an letzteren, und bei Validierung der Verbindungsanforderungsnachricht
- Übertragen und Austauschen von Daten zwischen dem fernen Zentralserver und dem Ortsteilnehmeranschluss entsprechend der angeforderten Dienstleistung, und nach Erbringung der angeforderten Dienstleistung
- Übertragung einer Nachricht (m₄SAMG) über den Bericht der Dienstleistung zum Verwaltungsmittel durch den fernen Zentralserver.

5. Verwaltungssystem nach Anspruch 4,
**dadurch gekennzeichnet,**
**dass** das Kommunikationsprotokoll nach Validierung der Nachricht über den Bericht der Dienstleistung durch das Verwaltungsmittel unter anderem weiterhin die folgenden Schritte umfassen kann:
- Übertrageneiner Informationsnachricht (m₅MGT) über die Fakturierung der Dienstleistung, die aus einer dem Teilnehmeranschluss zugeordneten Leistung besteht, zum Teilnehmeranschluss durch das Verwaltungsmittel,
- Übertragen einer Nachricht (m₇MGSA) zur Übertragung des Guthabens, über das der Teilnehmeranschluss verfügt, zum fernen Zentralserver durch das Verwaltungsmittel.

6. Verwaltungssystem nach Anspruch 4,
**dadurch gekennzeichnet,**
**dass** die Verbindungsanforderungsnachricht Informationen enthält, die es dem Teilnehmer gestatten, den tatsächlichen Betrag des Aufkommens zu verhandeln.

7. Verwaltungssystem nach einem der Ansprüche 2 bis 4,
**dadurch gekennzeichnet,**
**dass** der Schritt des Verbindens des Ortsteilnehmeranschlusses mit dem Verwaltungsmittel, der Schritt des Übertragens einer Dienstleistungsanforderungs-Autorisierungsnachricht zum fernen Zentralserver durch das Verwaltungsmittel, der Schritt des Übertragens einer Verbindungsanforderungsnachricht zum fernen Zentralserver durch den Teilnehmeranschluss, der Schritt des Übertragens und Austauschens von Daten zwischen dem fernen Zentralserver und dem Teilnehmeranschluss, der Schritt des Übertragens einer Nachricht über den Bericht der Dienstleistung zum Verwaltungsmittel durch den fernen Zentralserver in Echtzeit ausgeführt werden.

8. Verwaltungssystem nach einem der Ansprüche 2 bis 5,
**dadurch gekennzeichnet,**
**dass** der Schritt des Übertragens einer Fakturierungsnachricht zum Ortsteilnehmeranschluss durch das Verwaltungsmittel und der Schritt des Übertragens der Übertragungsnachricht zum fernen Zentralserver durch das Verwaltungsmittel in Echtzeit oder verzögert aufgeführt werden.

9. Verwaltungssystem nach einem der vorstehenden Ansprüche,
**dadurch gekennzeichnet,**
**dass** das Verwaltungsmittel wenigstens umfasst:
- einen Mikrocomputer, der mit seinen Peripherie-Elementen ausgestattet ist, wobei der Mikrocomputer umfasst:
- eine Mehrzahl von Fernmeldekarten für Mikrocomputer, die den Anschluss einer Mehrzahl von Teilnehmeranschlüssen erlauben,
- eine Mehrzahl von Karten einer Schnittstelle zwischen Mikrocomputer und numerischer Verbindung (2, 4) mit Datenpakettransfer, die es erlauben, den Zugang und die gleichzeitige Verbindung mit mehreren verschiedenen fernen Zentralservern zu gewährleisten.

10. Verwaltungssystem nach Anspruch 9,
**dadurch gekennzeichnet,**
**dass** das Verwaltungsmittel mit einem fernen Autorisierungszentrum (CA) verbunden ist.

11. Verwaltungssystem nach Anspruch 9,
**dadurch gekennzeichnet,**
**dass** dieses Mittel zur Verwaltung mit einem System zum elektronischen Bezahlen verbunden ist.
